# EUROPÄISCHE PATENTSCHRIFT

(11) **EP 3 668 743 B1**
(45) Veröffentlichungstag und Bekanntmachung des Hinweises auf die Patenterteilung: **27.04.2022**
(21) Anmeldenummer: 18768765.2
(22) Anmeldetag: 06.08.2018
(51) Int. Cl.: B60K 35/00, B60K 37/06, B60J 1/17, B60R 13/02

(54) **BEDIENVORRICHTUNG FÜR EIN KRAFTFAHRZEUG**
OPERATING DEVICE FOR A MOTOR VEHICLE
DISPOSITIF DE COMMANDE POUR UN VÉHICULE AUTOMOBILE

(30) Priorität: 18.08.2017 DE 102017214426
(43) Veröffentlichungstag der Anmeldung: 24.06.2020
(73) Patentinhaber: Volkswagen Aktiengesellschaft, 38440 Wolfsburg (DE)
(72) Erfinder: ULRICH, Dominik, 38448 Wolfsburg (DE); HERBORD, Eike Henning, 38302 Wolfenbüttel (DE)
(86) Internationale Anmeldenummer: PCT/EP2018/071288
(87) Internationale Veröffentlichungsnummer: WO 2019/034466

(56) Entgegenhaltungen:
- DE-A1- 10 324 918
- DE-A1-102012 206 661
- US-B2- 8 994 689

## Beschreibung

Die Erfindung betrifft eine Bedienvorrichtung für ein Kraftfahrzeug mit den Merkmalen vom Oberbegriff des Patentanspruchs 1.

Eine derartige Bedienvorrichtung ist aus der US 8 994 689 B2 bekannt geworden. Konkret ist eine kapazitive Schalteranordnung zur Bedienung von elektrisch betätigbaren Fenstern eines Kraftfahrzeugs beschrieben. Die kapazitive Schalteranordnung kann Bestandteil einer Armlehne auf der Fahrerseite sein. Die Schalteranordnung umfasst vier Bedienschalter, für jedes der vier Fenster einen. Es gibt Bedienschalter für die Fenster der Fahrerseite vorne und hinten und Bedienschalter für die Fenster der Beifahrerseite vorne und hinten. Des Weiteren sind Bedienschalter vorhanden, mit denen eine Verstellung der Fenster durch Bedienschalter an den Passagiertüren freigegeben oder blockiert werden kann.

Der DE 10 2012 206 661 A1 ist ein Bedienelement für ein Kraftfahrzeug als Bestandteil einer Mittelkonsole zu entnehmen. Das Bedienelement weist eine nach oben vorstehende Handauflage und Bedienfelder auf, welche wenigstens partiell berührungsempfindlich ausgebildet sind. Durch einfaches oder mehrfaches Antippen der Bedienfelder kann eine Bedienperson Befehle und Kommandos eingeben. Durch einen unterhalb eines jeden Bedienfeldes angeordneten Vibrator wird ein zur gewünschten Funktionsauslösung notwendiges, elektronisch erfasstes Antippen bzw. eine Tippfolge durch Vibration des entsprechenden Bedienfeldes quittiert.

Eine Bedienvorrichtung ist auch aus der DE 10 2014 016 570 A1 bekannt geworden. Konkret offenbart diese Schrift eine Fahrzeugtür mit einer Armauflage, auf deren Oberseite eine Bedienvorrichtung in Form eines Touchscreens integriert ist. Der Touchscreen weist ein Bedienfeld auf, welcher zwischen mehreren Anzeigemodi umschaltbar ist. Im ersten Anzeigemodus werden Bediensymbole zur Auswahl bedienbarer Aktoren (Außenspiegel, Fensterheber, Sitze und Klappen) angezeigt, wobei nach Auswahl eines der bedienbaren Aktoren eine Umschaltung in einen zweiten Anzeigemodus durchgeführt wird. Im zweiten Anzeigemodus zeigt der Touchscreen jeweils ein für den jeweils ausgewählten, bedienbaren Aktor spezifische Bediensymbole an.

In der DE 103 24 918 A1 ist eine Bedienvorrichtung zur Verstellung von verstellbaren Komponenten einer Fahrzeugtür eines Kraftfahrzeugs offenbart, welche eine als druckempfindlichen Flächensensor ausgebildete Bedienfläche aufweist. Ferner sind Folientastschalter vorhanden. Durch gleitende Bewegung eines Fingers über die Bedienfläche kann eine Verstellung einer Komponente durchgeführt werden, die mit der Strecke der durchgeführten Berührung korreliert.

Schließlich wird in der DE 10 2005 051 786 A1 eine Bedienvorrichtung zur Betätigung von Fensterhebern beschrieben. Dabei sind zwei Öffnungs-/Schließschalter zum Öffnen und Schließen jeweils zweier Fenster vorne oder hinten vorhanden. In der Nähe der Öffnungs-/Schließschalter ist ein Auswahlschalter zum Umschalten zwischen der Betätigung der vorderen oder hinteren Fenster angeordnet.

Der vorliegenden Erfindung liegt angesichts dieses Standes der Technik die Aufgabe zu Grunde, eine Bedienvorrichtung für ein Kraftfahrzeug bereitzustellen, welche mit geringen Werkzeugkosten herstellbar ist.

Diese vorliegende Aufgabe wird durch eine Bedienvorrichtung für ein Kraftfahrzeug mit den Merkmalen von Anspruch 1 gelöst.

Vorteilhafte Ausbildungen beziehungsweise Weiterbildungen der Erfindung sind den abhängigen Ansprüchen zu entnehmen.

Die Erfindung geht aus von einer Bedienvorrichtung für ein Kraftfahrzeug, mit wenigstens einem berührungsempfindlichen Bedienbereich. Der berührungsempfindliche Bedienbereich dient zur Anzeige wenigstens eines Bediensymbols und zur Betätigung wenigstens eines Fensterhebers.

Der berührungsempfindliche Bedienbereich kann beispielsweise als Touchscreen ausgebildet sein, wobei eine andere Ausbildung des Bedienbereichs, bspw. in Form eines Touchpads durchaus denkbar ist.

Es wird ferner vorgeschlagen, dass die Bedienvorrichtung, in einem gedachten Montagezustand im Kraftfahrzeug gesehen, eine Oberseite und eine daran angrenzende Vorderseite aufweist. Die Oberseite ist dabei also einem Fahrzeughimmel zugewandt und die Vorderseite einer Instrumententafel beziehungsweise einer Windschutzscheibe.

Es ist sowohl zumindest auf einem Teil der Oberseite als auch zumindest auf einem Teil der Vorderseite zumindest ein berührungsempfindlicher Bedienbereich zur Betätigung eines Fensterhebers angeordnet.

Durch diese Merkmale werden die Grundvoraussetzungen dafür geschaffen, dass die Bedienvorrichtung in x-Richtung, also in Längsrichtung eines Kraftfahrzeugs sehr kompakt und damit platzsparend gehalten werden kann. Denn durch die Anordnung von berührungsempfindlichen Bedienbereichen zur Betätigung von Fenstern auf der Vorder- und der Oberseite können übliche Fingermulden im Bereich der Öffnungs-/Schließschalter für die Fenster beziehungsweise zusätzliche Bedienflächen vermieden werden.

Eine Verwirklichung der Erfindung schlägt nun vor, dass alle sich von der Oberseite nach unten erstreckenden Seiten der Bedienvorrichtung mit der Oberseite einen Winkel von höchstens 90 Grad einnehmen. Diese Merkmale bilden die Grundvoraussetzung dafür, dass die Bedienvorrichtung ohne Hinterschnitte und daher mit geringen Werkzeugkosten hergestellt werden kann. Ansonsten notwendige Schieber und dergleichen in einem Werkzeug können entfallen. Der stützende Grundkörper (Korpus) der Bedienvorrichtung wird vorzugsweise in einem Kunststoff-Spritzgussverfahren hergestellt. Der Korpus der Bedienvorrichtung ist also einstückig ausgebildet, was den Fertigungsaufwand reduziert.

Um eine angenehme Bedienung der Bedienvorrichtung zu ermöglichen, wird ferner vorgeschlagen, dass der wenigstens eine auf der Oberseite befindliche, berührungsempfindliche Bedienbereich zur Betätigung der Fensterheber mit dem auf der Vorderseite befindlichen, wenigstens einen Bedienbereich zur Betätigung der Fensterheber einen Winkel einnimmt, welcher kleiner als 90 Grad ist. Bevorzugt liegt dieser Winkel in einem Bereich von etwa 60 bis 80 Grad.

Eine höchst zweckmäßige Weiterbildung der Erfindung schlägt vor, dass berührungsempfindliche Bedienbereiche vorhanden sind, die entweder zur Betätigung der vorderen Fensterheber oder zur Betätigung der hinteren Fensterheber dienen, wobei zur Umschaltung zwischen einer Betätigung der vorderen oder der hinteren Fensterheber ebenfalls ein berührungsempfindlicher Bedienbereich vorhanden ist. Auf diese Weise wird es ermöglicht, mit einem Minimum an Bedienbereichen auszukommen. Es müssen also nicht zur Bedienung der vorderen und der hinteren Fensterheber gesonderte Bedienbereiche vorgehalten werden. Dies führt ebenfalls zu einer Reduzierung des Platzbedarfs der Bedienvorrichtung.

Im Folgenden werden Weiterbildungen der Bedienvorrichtung vorgestellt, die jeweils zu einer Vereinfachung der Bedienung beziehungsweise jeweils zu einer höheren Intuitivität in der Bedienung führen.

So sind folgende Weiterbildungen der Erfindung denkbar:
- Durch eine Wischbewegung und/oder durch ein Doppeltippen, welches jeweils auf den wenigstens einen, berührungsempfindlichen Bedienbereich zur Betätigung wenigstens eines Fensterhebers ausgeführt wird, ist wenigstens ein Fenster in einem Dauerlauf offen- oder schließbar. Dabei kann durch ein einmaliges Antippen des wenigstens einen berührungsempfindlichen Bedienbereichs zur Betätigung wenigstens eines Fensterhebers der Dauerlauf beendet werden.
- Durch eine haltende Berührung auf dem wenigstens einen berührungsempfindlichen Bedienbereich zur Betätigung wenigstens eines Fensterhebers ist wenigstens ein Fenster in einem manuellen Lauf öffen- oder schließbar. Dabei kann durch ein Abheben eines Berührorgans von dem wenigstens einen berührungsempfindlichen Bedienbereich zur Betätigung wenigstens eines Fensterhebers der manuelle Lauf des wenigstens einen Fensters wieder beendet werden.
- Durch ein Doppeltippen auf den berührungsempfindlichen Bedienbereich zur Betätigungsumschaltung zwischen den vorderen und hinteren Fensterhebern und ein anschließendes Berühren wenigstens eines berührungsempfindlichen Bedienbereichs zum Betätigen der Fensterheber sind alle Fenster gleichzeitig öffen- oder schließbar. Durch diese Bedienung ist also eine sehr komfortable Lüftungsfunktion erzielbar.
- Es ist wenigstens ein berührungsempfindlicher Bedienbereich zur Verriegelung oder Entriegelung aller Fahrzeugtüren vorhanden. Dabei ist die Verriegelung durch ein einmaliges Antippen des berührungsempfindlichen Bedienbereichs zur Verriegelung oder Entriegelung aller Fahrzeugtüren durchführbar oder auch durch gleichzeitige Berührung mehrerer berührungsempfindlicher Bedienbereiche der Bedienvorrichtung. Eine Entriegelung kann durch einmaliges Antippen des berührungsempfindlichen Bedienbereichs zur Verriegelung oder Entriegelung aller Fahrzeugtüren durchgeführt werden.

In weiterer Ausgestaltung der Erfindung werden zur Erleichterung der Bedienbarkeit noch folgende Merkmale vorgeschlagen:
- Durch eine Wischbewegung entgegen einer Fahrtrichtung und/oder durch ein Doppeltippen, welches jeweils auf dem wenigstens einen auf der Oberseite befindlichen, berührungsempfindlichen Bedienbereich zur Betätigung der Fensterheber ausgeführt wird, ist wenigstens ein Fenster in einem Dauerlauf öffenbar. Dabei ist durch eine Berührung des wenigstens einen auf der Oberseite befindlichen, berührungsempfindlichen Bedienbereichs zur Betätigung der Fensterheber der Dauerlauf wieder beendbar.
- Durch eine haltende Berührung auf dem wenigstens einen auf der Oberseite befindlichen, berührungsempfindlichen Bedienbereich zur Betätigung der Fensterheber ist wenigstens ein Fenster in einem manuellen Lauf öffenbar. Durch ein Abheben eines Berührungsorgans von dem wenigstens einen auf der Oberseite befindlichen, berührungsempfindlichen Bereich zur Betätigung der Fensterheber kann der manuelle Lauf des wenigstens einen Fensters wieder beendet werden.
- Durch eine Wischbewegung nach oben in Richtung der Oberseite und/oder durch ein Doppeltippen, welches jeweils auf dem wenigstens einen auf der Vorderseite befindlichen, berührungsempfindlichen Bedienbereich zur Betätigung der Fensterheber ausgeführt wird, kann wenigstens ein geöffnetes Fenster in einem Dauerlauf geschlossen werden.
- Durch eine Berührung des wenigstens einen auf der Vorderseite befindlichen, berührungsempfindlichen Bedienbereichs zur Betätigung der Fensterheber kann der Dauerlauf wieder beendet werden.
- Durch eine haltende Berührung auf dem wenigstens einen auf der Vorderseite befindlichen, berührungsempfindlichen Bedienbereich zur Betätigung der Fensterheber ist wenigstens ein Fenster in einem manuellen Lauf schließbar. Durch ein Abheben eines Berührungsorgans von dem wenigstens einen auf der Vorderseite befindlichen, berührungsempfindlichen Bereich zur Betätigung der Fensterheber kann der manuelle Lauf des wenigstens einen Fensters wieder beendet werden.
- Es ist auch denkbar, dass durch eine Berührung des wenigstens einen auf der Vorderseite befindlichen, berührungsempfindlichen Bedienbereichs zur Betätigung der Fensterheber, gefolgt von einer Berührung des wenigstens einen auf der Oberseite befindlichen, berührungsempfindlichen Bedienbereichs zur Betätigung der Fensterheber, wenigstens ein Fenster in einem Dauerlauf schließbar ist.

Mit der Erfindung soll auch ein Kraftfahrzeug unter Schutz gestellt werden, welches mit wenigstens einer erfindungsgemäßen Bedienvorrichtung ausgestattet ist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

### Es zeigen, jeweils schematisch

- Fig. 1: ein Innenraum eines Kraftfahrzeugs im Bereich des Cockpits, mit einer erfindungsgemäßen Bedienvorrichtung,
- Fig. 2: den Korpus der Bedienvorrichtung, in einer Seitendarstellung,
- Fig. 3: eine Darstellung der Bedienvorrichtung gemäß Ansicht III aus Fig. 2,
- Fig. 4: eine Darstellung der Bedienvorrichtung gemäß Ansicht IV aus Fig. 3,
- Fig. 5: eine Ansicht der Bedienvorrichtung vergleichbar mit der Ansicht aus Fig. 3, jedoch in einem anderen Bedien- und Anzeigemodus und
- Fig. 6: eine Darstellung vergleichbar mit Fig. 3, noch in einem anderen denkbaren Anzeige- und Bedienmodus.

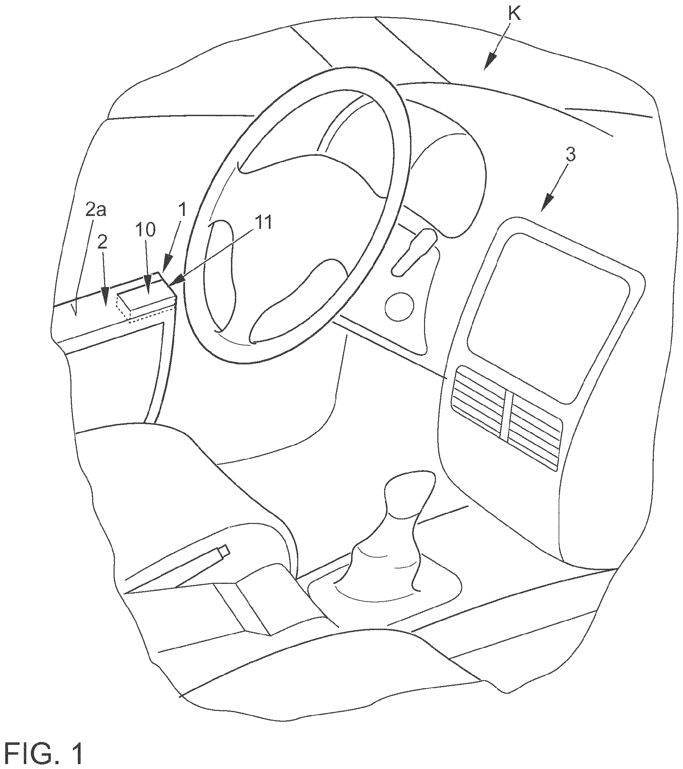

Es wird zunächst auf die Fig. 1 Bezug genommen, in der der Innenraum eines Kraftfahrzeugs K im Bereich seines Cockpits ersichtlich ist. Das Kraftfahrzeug K weist an seiner Tür eine Armauflage 2 auf, in die eine Bedienvorrichtung 1 integriert ist.

In der dargestellten Montageposition der Bedienvorrichtung 1 ist von ihrem Korpus lediglich eine Oberseite 10 ersichtlich. Die Oberseite 10 ist dabei in etwa bündig zu einer Oberseite 2a der Armauflage 2 ausgerichtet. Zumindest ragt die Oberseite 10 nicht nennenswert aus der Oberseite 2a heraus. Des Weiteren ist eine Vorderseite 11 frei zugänglich und durch Finger eines Bedieners berührbar. Eine Berührung der Vorderseite 11 kann auf höchst einfache Weise dadurch erfolgen, dass ein Bediener seine linke Hand oberhalb oder auf der Oberseite 10 positioniert. Dabei sind gleichzeitig auch seine nach unten gerichteten Finger automatisch über der Vorderseite 11 positioniert. Eine Berührung der Vorderseite 11 und damit eine Bedienung von dort vorhandenen Bedienelementen ist also sehr leicht möglich.

Im dargestellten Montagezustand ist die Oberseite 10 auf einen nicht näher dargestellten Dachhimmel des Kraftfahrzeugs K und die Vorderseite 11 auf eine Instrumententafel 3 beziehungsweise eine dahinter befindliche Windschutzscheibe gerichtet.

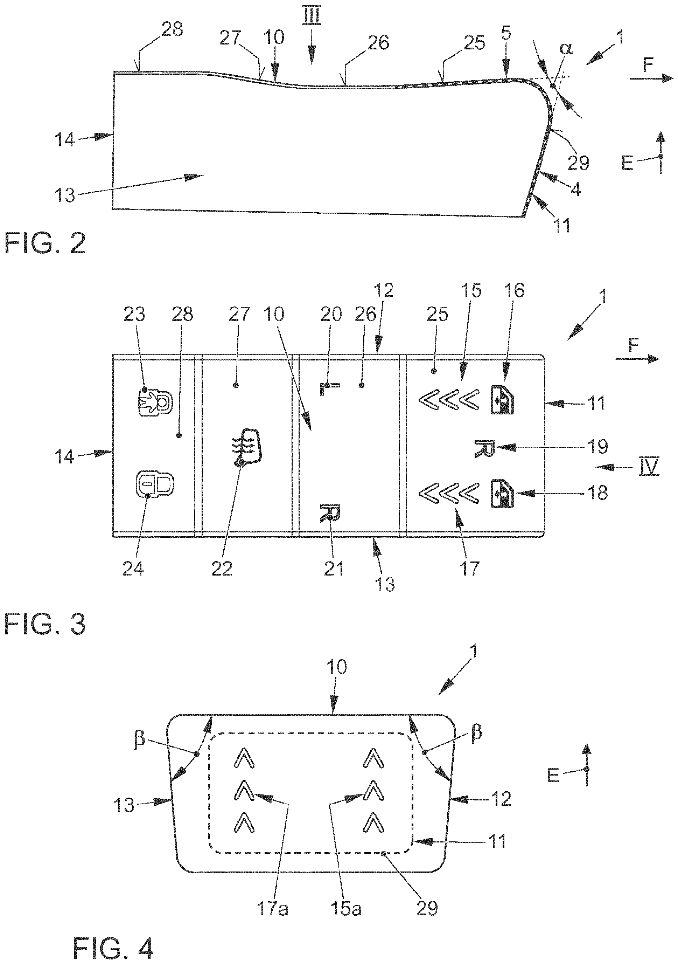

Im Folgenden wird auf die Fig. 2 bis 4 Bezug genommen, die den Korpus der Bedienvorrichtung 1 in Alleinstellung zeigen. Der Korpus der Bedienvorrichtung 1 ist aus Kunststoff und in einem Kunststoff-Spritzgussverfahren einstückig, also aus einem Stück, hergestellt.

Wie ersichtlich, weist die Bedienvorrichtung eine Oberseite 10, eine Vorderseite 11, eine in einer gedachten Fahrtrichtung F befindliche, linke Seite 12 und eine rechte Seite 13 auf. Eine Rückseite ist mit 14 beziffert.

Ferner sind auf der Oberseite 10 mehrere berührungsempfindliche Bedienbereiche 25, 26, 27 und 28 angeordnet.

Innerhalb des Bedienbereichs 25 sind Bediensymbole 15 und 16 zur Betätigung eines Fensterhebers auf der in Fahrtrichtung liegenden, linken Seite des Kraftfahrzeugs K und Bediensymbole 17 und 18 zur Betätigung eines Fensterhebers auf der entsprechenden rechten Seite des Kraftfahrzeugs K vorhanden. Ferner ist ein Bediensymbol 19 vorhanden, mit der eine Umschaltung zwischen einer Betätigung der vorderen Fensterheber und einer Bedienung der hinteren Fensterheber im Fond des Kraftfahrzeugs K und umgekehrt möglich ist.

Gleichermaßen sind auf der Vorderseite 11 innerhalb eines berührungsempfindlichen Bedienbereichs 29 Bediensymbole 15a und 17a vorhanden, welche ebenfalls zur Betätigung der Fensterheber dienen.

Es ist auch denkbar, dass die einzelnen, berührungsempfindlichen Bedienbereiche 25 bis 29 oder ein zusammenhängender, berührungsempfindlicher Bedienbereich nicht als Touchscreen, sondern in Form eines Touchpads ausgebildet sind. Dabei können die Bediensymbole auf einfache Weise als hinterleuchtbare Symbole ausgebildet werden, die je nach Bedien- beziehungsweise Anzeigemodus hinterleuchtet werden oder nicht.

Bediensymbole 20 und 21 dienen zur Initiierung der Verstellung eines verstellbaren Außenspiegels auf der linken Seite oder auf der rechten Seite.

Über ein Bediensymbol 22 kann eine Spiegelheizung der Außenspiegel aktiviert werden. Ferner ist über ein Bediensymbol 23 eine Kindersicherung (Deaktivierung einer möglichen Fenster- und Türbetätigung im Fond des Kraftfahrzeugs) aktivierbar und mit einem Bediensymbol 24 ist ein gleichzeitiges Verriegeln aller Türen möglich.

Da sich die genannten Bediensymbole alle jeweils auf berührungsempfindlichen Bedienbereichen befinden, genügt zum Bedienen der entsprechend zugeordneten Funktionen eine Berührung der Bediensymbole, wie im Folgenden noch näher beschrieben wird.

in Abweichung zum Ausführungsbeispiel ist es denkbar, dass mehrere berührungsempfindliche Bedienbereiche zu einem größeren, berührungsempfindlichen Bedienbereich zusammengeführt sind. Es ist auch denkbar, die berührungsempfindlichen Bedienbereiche 25 bis 29 durch einen einzigen berührungsempfindlichen Bedienbereich zu ersetzen. Auf der anderen Seite ist auch vorstellbar, dass jedem Bediensymbol ein berührungsempfindlicher Bedienbereich zugeordnet ist.

Es soll noch ausdrücklich darauf hingewiesen werden, dass die Bedienvorrichtung 1 beziehungsweise ihr Korpus derart ausgebildet ist, dass sämtliche von der Oberseite 10 sich nach unten sich erstreckende Seiten 11, 12, 13 und 14 einen solchen Winkel mit der Oberseite 10 einnehmen, welcher maximal 90 Grad beträgt, vorzugsweise kleiner als 90 Grad ist. Mit anderen Worten, ist der Korpus der Bedienvorrichtung 1 so ausgebildet, dass er in einem Stück mittels eines Kunststoff-Spritzgussverfahrens herstellbar und aus dem Werkzeug in einer Entformungsrichtung E ohne Weiteres entformbar ist.

Beispielhaft sind Winkel β eingezeichnet, die die Seiten 12 beziehungsweise 13 jeweils mit der Oberseite 10 einnehmen.

Mit α ist ein Winkel beziffert, welchen die gedachten Verlängerungen der berührungsempfindlichen Bedienbereiche 25 und 29 miteinander bilden. Durch eine derartige Ausgestaltung des Winkels α kann eine sehr gute Haptik und Bedienbarkeit der Bedienvorrichtung 1 erzielt werden.

Die Bedienung der Bedienvorrichtung 1 lässt sich nun folgendermaßen durchführen:
Bedienung der Fensterheber:
- Durch eine Wischbewegung entgegen einer gedachten Fahrtrichtung F und/oder durch ein Doppeltippen, welches jeweils auf dem wenigstens einen auf der Oberseite 10 befindlichen, berührungsempfindlichen Bedienbereich 25 zur Betätigung der Fensterheber ausgeführt wird, kann wenigstens ein Fenster in einem Dauerlauf geöffnet werden. Vollführt also ein Bediener eine solche Wischbewegung im Bereich der Bediensymbole 15 und/oder 16, wird im dargestellten Anzeigemodus das Fenster der linken Fahrertür in einem Dauerlauf geöffnet. Durch eine Berührung des Bedienbereichs 25 im Bereich der Symbole 15 und/oder 16 kann der Dauerlauf jederzeit wieder beendet werden.
- Durch eine haltende Berührung (also Antippen und dabei Halten) auf dem wenigstens einen auf der Oberseite 10 befindlichen, berührungsempfindlichen Bedienbereich 25 ist es möglich, wenigstens ein Fenster in einem manuellen Lauf zu öffnen. Durch ein Abheben des Berührorgans von dem wenigstens einen auf der Oberseite 10 befindlichen, berührungsempfindlichen Bedienbereich 25 wird der manuelle Lauf des wenigstens einen Fensters beendet. Tippt also ein Bediener den Bedienbereich 25 im Bereich der Bediensymbole 15 und/oder 16 an und hält seinen Finger auf dem Bedienbereich 25, so startet ein manueller Öffnungslauf des Fensters der Fahrertür. Lässt der Bediener den Bedienbereich 25 los, so wird der manuelle Lauf gestoppt.

Analog erfolgt die Bedienung des Fensters der Beifahrertür über die Bediensymbole 17 und 18.
- Wird vom Bediener wieder ein Schließen eines geöffneten Fensters gewünscht, so kann er durch eine wischende Berührung des berührungsempfindlichen Bedienbereichs 29 im Bereich der Bediensymbole 15a nach oben, also in Richtung der durch die Bediensymbole 15a oder 17a dargestellten Pfeile, ein geöffnetes Fenster in einem Dauerlauf schließen. Vollführt also ein Bediener eine nach oben gerichtete Wischbewegung auf dem Bediensymbol 15a, so wird ein geöffnetes Fenster einer Fahrertür in einem Dauerlauf wieder geschlossen.
- Soll eine manuelle Schließbewegung eines geöffneten Fensters durchgeführt werden, so muss der Bedienbereich 29 im Bereich der Bediensymbole 15a oder 17a in einer haltenden Berührung berührt werden. Berührt also ein Bediener beispielsweise das Bediensymbol 15a und lässt seinen Finger in Kontakt mit dem Bedienbereich 29, startet das geöffnete Fenster auf der Fahrerseite mit einer Schließbewegung und läuft so lange, bis das Fenster vollkommen geschlossen ist oder bis der Bediener vorher seinen Finger wieder vom Bediensymbol 15a abhebt.

Es versteht sich von selbst, dass die Bedienung der Fensterheber sowohl auf der Fahrer- als auch auf der Beifahrerseite in gleicher Weise erfolgt.
- Wird vom Bediener eine Bedienung der hinteren Fenster im Fond des Kraftfahrzeugs K gewünscht, so genügt eine Berührung des Bediensymbols 19. In diesem Fall erfolgt eine hellere oder andersfarbige Beleuchtung des Bediensymbols 19 (sogenannte Toggelfunktion), um auf die aktivierte Bedienbarkeit der hinteren Fenster hinzuweisen. Die Bedienung der hinteren Fenster ist dann analog zur Bedienung der vorderen Fenster möglich.

Das anschließende Umschaltung auf eine Bedienbarkeit wieder der vorderen Fenster kann durch abermaliges Antippen des Bediensymbols 19 erfolgen, woraufhin die Hinterleuchtung des Bediensymbols 19 wieder deaktiviert wird. Es ist aber auch denkbar, das Umschalten auf die Frontbedienung über eine Zeitsteuerung durchführen zu lassen. Das heißt, nach Ablauf einer bestimmten oder bestimmbaren Zeit wechselt die Bedienbarkeit automatisch von der Fondbedienung wieder hin zur Frontbedienung.

Durch die in Montageposition frei liegende Vorderseite 11 mit dem berührungsempfindlichen Bedienbereich 29, welche in den berührungsempfindlichen Bedienbereich 25 der Oberseite 10 übergeht, ist die Bedienvorrichtung 1 sehr platzsparend in X-Richtung (Längsrichtung des Kraftfahrzeugs K) ausführbar. Durch die dargestellte Ausgestaltung ist überdies eine aus Sicherheitsgründen geforderte "Pull to Close"-Bedienung sehr platzsparend möglich.

Schließlich soll in Zusammenhang mit der Bedienung der Fensterheber noch auf eine außerordentlich vorteilhafte Lüftungsfunktion hingewiesen werden:

Berührt ein Bediener das Bediensymbol 19 durch ein Doppeltippen (also zweimaliges kurzes Antippen), so fängt das Bediensymbol 19 für eine kurze Zeit, vorzugsweise für etwa 5 Sekunden zu blinken an. Berührt der Bediener während dieser Zeit eines der Bediensymbole 15, 16, 17 und/oder 18 so werden gleichzeitig alle Fenster geöffnet.

Wünscht der Bediener ein gleichzeitiges Schließen aller geöffneten Fenster, so kann er dies analog dadurch herbeiführen, dass das Bediensymbol 19 ebenfalls durch ein Doppeltippen berührt und anschließend eines der Bediensymbole 15a und/oder 17a durch ein Antippen innerhalb einer bestimmten Karenzzeit berührt.

Im Übrigen ist der Start eines Dauerlaufs zum Öffnen eines Fensters auch durch ein Doppeltippen der Bediensymbole 15 und/oder 16 beziehungsweise 17 und/oder 18 denkbar. Ein Schließen eines Fensters in einem Dauerlauf ist gleichermaßen durch Doppeltippen der Bediensymbole 17a und/oder 15a denkbar.

Spiegelverstellung:
Die Auswahl eines zu verstellenden Außenspiegels erfolgt durch Berührung entweder des Bediensymbols 20 (linker Außenspiegel) oder des Bediensymbols 21 (rechter Außenspiegel).

Berührt ein Bediener beispielsweise das Bediensymbol 21, so wechselt die Darstellung beziehungsweise Sichtbarkeit der Bediensymbole in einen anderen Anzeigebeziehungsweise Bedienmodus.

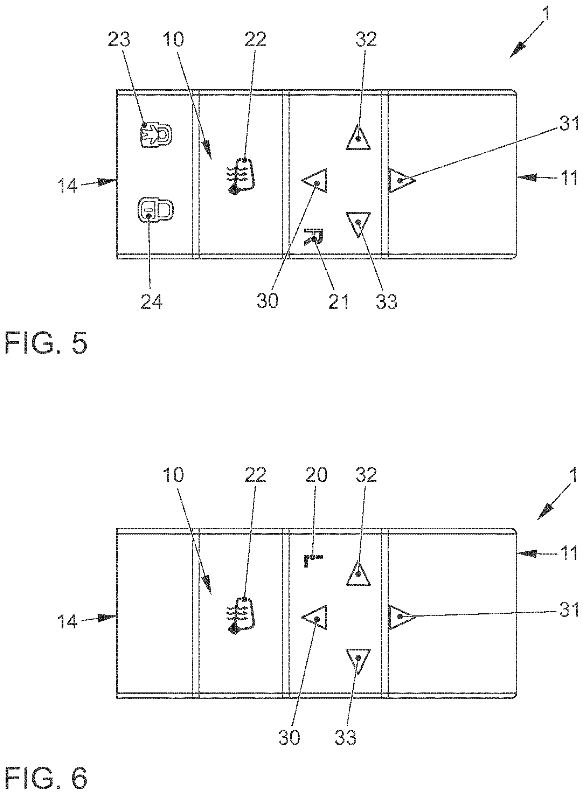

Dies ist in Fig. 5 dargestellt. Darin ist ersichtlich, dass die Bediensymbole 15 bis 19 verschwunden bzw. nicht mehr sichtbar sind und andere, pfeilartige Bediensymbole 30, 31, 32 und 33 ersichtlich sind. Konkret kann durch Berührung der Bediensymbole 32 und 33 eine Verstellung des rechten Außenspiegels um eine vertikale Schwenkachse und durch eine Berührung der Bediensymbole 30 und 31 eine Verstellung des rechten Außenspiegels um eine horizontale Schwenkachse bewerkstelligt werden. Analog erfolgt die Verstellung des linken Außenspiegels nach Berührung des Bediensymbols 20 (vergleiche Fig. 3).

Fig. 6 zeigt einen Bedienmodus, bei dem über das Bediensymbol 20 (vgl. Fig. 3) die Verstellung des linken Außenspiegels angewählt wurde. Im Unterschied zur Fig. 5 sind hierbei als mögliche Variante die Bediensymbole 23 und 24 auch nicht mehr ersichtlich.

Tür-Verriegelungsfunktion (Lock/Unlock-Funktion):
Es ist noch erwähnenswert, dass das Kraftfahrzeug K nicht nur durch ein Antippen des Bediensymbols 24 vollständig verriegelt werden kann, sondern auch durch gleichzeitiges Antippen von zwei oder mehreren der erwähnten Bediensymbole. Hierdurch wird es einem Bediener ermöglicht, auch in einer Paniksituation das Kraftfahrzeug K ohne Probleme verriegeln zu können.

## Patentansprüche

1. Bedienvorrichtung (1) für ein Kraftfahrzeug (K), mit wenigstens einem berührungsempfindlichen Bedienbereich (25-29), welcher zur Anzeige wenigstens eines Bediensymbols (15a, 17a; 15-24; 30-33) dient und zur Betätigung wenigstens eines Fensterhebers geeignet ist, wobei die Bedienvorrichtung (1), in einem gedachten Montagezustand im Kraftfahrzeug (K) gesehen, eine Oberseite (10) und eine daran angrenzende freiliegende Vorderseite (11) aufweist, wobei zumindest ein berührungsempfindlicher Bedienbereich (25, 29) zur Betätigung eines Fensterhebers sowohl zumindest auf einem Teil der Oberseite (10) als auch zumindest auf einem Teil der Vorderseite (11) angeordnet ist, und wobei alle sich von der Oberseite (10) nach unten erstreckenden Seiten (11-14) mit der Oberseite (10) einen Winkel (α, β) von höchstens 90 Grad einnehmen.

2. Bedienvorrichtung (1) nach Anspruch 1, **dadurch gekennzeichnet, dass** der wenigstens eine auf der Oberseite (10) befindliche, berührungsempfindliche Bedienbereich (25) zur Betätigung der Fensterheber mit dem auf der Vorderseite (11) befindlichen, wenigstens einen Bedienbereich (29) zur Betätigung der Fensterheber einen Winkel (a) einnimmt, welcher kleiner als 90 Grad ist, bevorzugt in einem Bereich von etwa 60 Grad bis etwa 80 Grad liegt.

3. Bedienvorrichtung (1) nach einem der vorhergehenden Ansprüche, **dadurch gekennzeichnet, dass** berührungsempfindliche Bedienbereiche (25, 29) vorhanden sind, die entweder zur Betätigung der vorderen Fensterheber oder zur Betätigung der hinteren Fensterheber dienen, wobei zur Umschaltung zwischen einer Betätigung der vorderen oder hinteren Fensterheber ebenfalls ein berührungsempfindlicher Bedienbereich (25) vorhanden ist.

4. Bedienvorrichtung (1) nach einem der vorhergehenden Ansprüche, **dadurch gekennzeichnet, dass** durch eine Wischbewegung und/oder durch ein Doppeltippen, welches jeweils auf dem wenigstens einen, berührungsempfindlichen Bedienbereich (25, 29) zur Betätigung wenigstens eines Fensterhebers ausgeführt wird, wenigstens ein Fenster in einem Dauerlauf öffen- oder schließbar ist.

5. Bedienvorrichtung (1) nach Anspruch 4, **dadurch gekennzeichnet, dass** durch ein einmaliges Antippen des wenigstens einen berührungsempfindlichen Bedienbereichs (25, 29) zur Betätigung wenigstens eines Fensterhebers der Dauerlauf beendet werden kann.

6. Bedienvorrichtung (1) nach einem der vorhergehenden Ansprüche, **dadurch gekennzeichnet, dass** durch eine haltende Berührung auf dem wenigstens einen berührungsempfindlichen Bedienbereich (25, 29) zur Betätigung wenigstens eines Fensterhebers wenigstens ein Fenster in einem manuellen Lauf öffen- oder schließbar ist.

7. Bedienvorrichtung (1) nach Anspruch 6, **dadurch gekennzeichnet, dass** durch ein Abheben eines Berührorgans von dem wenigstens einen berührungsempfindlichen Bedienbereich (25, 29) zur Betätigung wenigstens eines Fensterhebers der manuelle Lauf des wenigstens einen Fensters beendet werden kann.

8. Bedienvorrichtung (1) nach einem der vorhergehenden Ansprüche 3 bis 7, **dadurch gekennzeichnet, dass** durch ein Doppeltippen auf den berührungsempfindlichen Bedienbereich (25) zur Betätigungsumschaltung zwischen den vorderen und hinteren Fensterhebern und ein anschließendes Berühren wenigstens eines berührungsempfindlichen Bedienbereichs (25, 29) zum Betätigen der Fensterheber alle Fenster gleichzeitig öffen- oder schließbar sind.

9. Bedienvorrichtung (1) nach einem der vorhergehenden Ansprüche, **dadurch gekennzeichnet, dass** wenigstens ein berührungsempfindlicher Bedienbereich (24) zur Verriegelung oder Entriegelung aller Fahrzeugtüren vorhanden ist, wobei die Verriegelung durch einmaliges Antippen des berührungsempfindlichen Bedienbereichs (24) zur Verriegelung oder Entriegelung aller Fahrzeugtüren durchführbar ist oder auch durch gleichzeitige Berührung mehrerer berührungsempfindlicher Bedienbereiche und wobei die Entriegelung durch einmaliges Antippen des berührungsempfindlichen Bedienbereichs (24) zur Verriegelung oder Entriegelung aller Fahrzeugtüren durchführbar ist.

10. Kraftfahrzeug (K), **gekennzeichnet durch** wenigstens eine Bedienvorrichtung (1) nach einem der vorhergehenden Ansprüche.

## Claims

1. Operating device (1) for a motor vehicle (K), with at least one touch-sensitive operating region (25-29) which serves for displaying at least one operating symbol (15a, 17a; 15-24; 30-33) and is suitable for actuating at least one window regulator, wherein the operating device (1), viewed in an imaginary mounted state in the motor vehicle (K), has an upper side (10) and an exposed front side (11) adjacent thereto, wherein at least one touch-sensitive operating region (25, 29) for actuating a window regulator is arranged both at least on a part of the upper side (10) and at least on a part of the front side (11), and wherein all the sides (11-14) extending downward from the upper side (10) include an angle (α, β) of at most 90 degrees with the upper side (10) .

2. Operating device (1) according to Claim 1, **characterized in that** the at least one touch-sensitive operating region (25), located on the upper side (10), for actuating the window regulators includes with the at least one operating region (29), located on the front side (11), for actuating the window regulators an angle (α) that is less than 90 degrees and preferably lies within a range from approximately 60 degrees to approximately 80 degrees.

3. Operating device (1) according to either of the preceding claims, **characterized in that** touch-sensitive operating regions (25, 29) are present, which serve either for actuating the front window regulators or for actuating the rear window regulators, wherein a touch-sensitive operating region (25) is likewise present for switching over between an actuation of the front window regulators or of the rear window regulators.

4. Operating device (1) according to one of the preceding claims, **characterized in that** at least one window is capable of being opened or closed in a continuous action by a swiping motion and/or by a double tap, which in each instance is executed on the at least one touch-sensitive operating region (25, 29) for actuating at least one window regulator.

5. Operating device (1) according to Claim 4, **characterized in that** the continuous action can be terminated by a single tap on the at least one touch-sensitive operating region (25, 29) for actuating at least one window regulator.

6. Operating device (1) according to one of the preceding claims, **characterized in that** at least one window is capable of being opened or closed in a manual action by a sustained touching contact on the at least one touch-sensitive operating region (25, 29) for actuating at least one window regulator.

7. Operating device (1) according to Claim 6, **characterized in that** the manual action of the at least one window can be terminated by lifting a touching element away from the at least one touch-sensitive operating region (25, 29) for actuating at least one window regulator.

8. Operating device (1) according to one of preceding Claims 3 to 7, **characterized in that** all the windows are capable of being opened or closed simultaneously by a double tap on the touch-sensitive operating region (25) for switching actuation over between the front window regulators and the rear window regulators and by a subsequent touching of at least one touch-sensitive operating region (25, 29) for actuating the window regulators.

9. Operating device (1) according to one of the preceding claims, **characterized in that** at least one touch-sensitive operating region (24) is present for locking or unlocking all the vehicle doors, wherein the locking is capable of being implemented by a single tap on the touch-sensitive operating region (24) for locking or unlocking all the vehicle doors or by simultaneously touching a plurality of touch-sensitive operating regions, and wherein the unlocking is capable of being implemented by a single tap on the touch-sensitive operating region (24) for locking or unlocking all the vehicle doors.

10. Motor vehicle (K), **characterized by** at least one operating device (1) according to one of the preceding claims.

## Revendications

1. Dispositif de commande (1) destiné à un véhicule automobile (K), ledit dispositif de commande comprenant au moins une zone de commande tactile (25-29) qui sert à afficher au moins un symbole de commande (15a, 17a ; 15-24 ; 30-33) et qui est appropriée pour actionner au moins un lève-vitre, le dispositif de commande (1), vu dans un état monté imaginaire dans le véhicule automobile (K), comportant un côté supérieur (10) et un côté avant découvert (11) adjacent audit côté supérieur, au moins une zone de commande tactile (25, 29) destinée à l'actionnement d'un lève-vitre étant disposée aussi bien sur au moins une partie du côté supérieur (10) que sur au moins une partie du côté avant (11), et tous les côtés (11-14) qui s'étendent vers le bas depuis le côté supérieur (10) formant avec le côté supérieur (10) un angle (α, β) de 90 degrés maximum.

2. Dispositif de commande (1) selon la revendication 1, **caractérisé en ce que** l'au moins une zone de commande tactile (25), située sur le côté supérieur (10) et destinée à l'actionnement du lève-vitre, forme avec l'au moins une zone de commande (29), située sur le côté avant (11) et destinée à l'actionnement du lève-vitre, un angle (α) inférieur à 90 degrés, de préférence dans une plage d'environ 60 degrés à environ 80 degrés.

3. Dispositif de commande (1) selon l'une des revendications précédentes, **caractérisé en ce que** des zones de commande tactiles (25, 29) sont prévues qui servent soit à actionner le lève-vitre avant soit à actionner le lève-vitre arrière, une zone de commande tactile (25) étant également prévue pour effectuer la commutation entre l'actionnement du lève-vitre avant et l'actionnement du lève-vitre arrière.

4. Dispositif de commande (1) selon l'une des revendications précédentes, **caractérisé en ce qu'**au moins une vitre peut être ouverte ou fermée en continu par un mouvement de balayage et/ou un double tapotement, qui est effectué sur l'au moins une zone de commande tactile (25, 29) destinée à l'actionnement de l'au moins un lève-vitre.

5. Dispositif de commande (1) selon la revendication 4, **caractérisé en ce que** la course continue peut être terminée par un simple tapotement sur l'au moins une zone de commande tactile (25, 29) destinée à l'actionnement d'au moins un lève-vitre.

6. Dispositif de commande (1) selon l'une des revendications précédentes, **caractérisé en ce qu'**au moins une vitre peut être ouverte ou fermée manuellement dans une course manuelle par contact maintenu sur l'au moins une zone de commande tactile (25, 29) destinée à l'actionnement d'au moins un lève-vitre.

7. Dispositif de commande (1) selon la revendication 6, **caractérisé en ce que** la course manuelle de l'au moins une vitre peut être terminée par soulèvement d'un élément tactile de l'au moins une zone de commande tactile (25, 29) destinée à l'actionnement d'au moins un lève-vitre.

8. Dispositif de commande (1) selon l'une des revendications précédentes 3 à 7, **caractérisé en ce que** toutes les fenêtres peuvent être ouvertes ou fermées en même temps par un double tapotement sur la zone de commande tactile (25) destinée à la commutation entre les lève-vitres avant et arrière, puis par un contact avec au moins un zone de commande tactile (25, 29) destinée à l'actionnement des lève-vitres.

9. Dispositif de commande (1) selon l'une des revendications précédentes, **caractérisé en ce qu'**au moins une zone de commande tactile (24) est prévue pour verrouiller ou déverrouiller toutes les portes du véhicule, le verrouillage étant effectué par un simple tapotement sur la zone de commande tactile (24) destinée au verrouillage ou déverrouillage de toutes les portes du véhicule ou par contact simultané avec plusieurs zones de commande tactiles et le déverrouillage pouvant être effectué par simple tapotement sur la zone de commande tactile (24) destinée au verrouillage ou déverrouillage de toutes portes du véhicule.

10. Véhicule automobile (K), **caractérisé par** au moins un dispositif de commande (1) selon l'une des revendications précédentes.
